# EUROPEAN PATENT SPECIFICATION

(11) **EP 3 499 786 B1**
(45) Date of publication and mention of the grant of the patent: **11.11.2020**
(21) Application number: 17864780.6
(22) Date of filing: 02.08.2017
(51) Int. Cl.: H04L 7/00, H04L 29/08

(54) **DATA SYNCHRONIZATION METHOD, APPARATUS, STORAGE MEDIUM AND ELECTRONIC DEVICE**
DATENSYNCHRONISATIONSVERFAHREN, VORRICHTUNG, SPEICHERMEDIUM UND ELEKTRONISCHE VORRICHTUNG
PROCÉDÉ, APPAREIL, SUPPORT DE STOCKAGE ET DISPOSITIF ÉLECTRONIQUE DE SYNCHRONISATION DE DONNÉES

(30) Priority: 25.10.2016 CN 201610942149
(43) Date of publication of application: 19.06.2019
(73) Proprietor: GUANGDONG OPPO MOBILE TELECOMMUNICATIONS CORP., LTD., Wusha, Chang'an Dongguan, Guangdong 523860 (CN)
(72) Inventor: HE, Hui, Dongguan Guangdong 523860 (CN)
(74) Representative: Manitz Finsterwald Patent- und Rechtsanwaltspartnerschaft mbB
(86) International application number: PCT/CN2017/095622
(87) International publication number: WO 2018/076864

(56) References cited:
- EP-A1- 2 819 376
- CN-A- 103 729 470
- CN-A- 104 243 132
- CN-A- 104 253 868
- CN-A- 105 389 463
- CN-A- 106 357 808
- US-A1- 2014 068 018
- US-A1- 2014 068 018

## Description

### TECHNICAL FIELD

The present disclosure relates to a field of cloud backup technologies, and more particularly to a method and a device for synchronizing data, a storage medium and an electronic device.

### BACKGROUND

Cloud backup is a kind of burgeoning cloud computation service. A cloud backup service provider provides a data storage and backup service by jointing massive and heterogeneous storage devices in network together through technologies such as virtualization, distributed processing, and broadband networks. A user may access the cloud backup through mobile Internet and broadband Internet, to centrally store and securely save a large number of scattered files or folders on the terminal.

Cloud backup data synchronization is to synchronously back up the data of the terminal to a cloud server, such that the cloud server stores the same data as the terminal. For example, a short message in the terminal is synchronously backed up to the cloud server, such that the cloud server stores the same short message as the terminal.

EP 2819376 A1 relates to a method for synchronizing data. The method includes: a cloud server receiving a data synchronization request sent by a mobile terminal. The data synchronization request carries an identifier of the mobile terminal, last time that the data is synchronized by the mobile terminal and a synchronization account for synchronizing data between the mobile terminal and the cloud server. The method further includes: the cloud server detecting that record operation time of data to be synchronized is greater than the last time that the data was synchronized by the mobile terminal and synchronizing the data to be synchronized between the cloud server and the mobile terminal. The data to be synchronized corresponds to the identifier in the synchronization account on the cloud server.

US 2014/068018 describes a cloud system compacting data synchronization for a mobile environment.

### SUMMARY

The present application relates to a method for synchronizing data according to independent claim 1, a device for synchronizing data according to independent claim 7 and a storage medium according to independent claim 11. Further aspects of the present application are defined by the dependent claims.

The method and the device for synchronizing data and the storage medium according to embodiments of the present disclosure may reduce the load of the cloud server.

### BRIEF DESCRIPTION OF THE DRAWINGS

Fig. 1 is a flow chart illustrating a method for synchronizing data according to embodiments of the present disclosure.
Fig. 2 is a schematic diagram illustrating a scenario of a system for synchronizing data according to embodiments of the present disclosure.
Fig. 3 is another flow chart illustrating a method for synchronizing data according to embodiments of the present disclosure.
Fig. 4 is a first block diagram illustrating a device for synchronizing data according to embodiments of the present disclosure.
Fig. 5 is a second block diagram illustrating a device for synchronizing data according to embodiments of the present disclosure.
Fig. 6 is a third block diagram illustrating a device for synchronizing data according to embodiments of the present disclosure.
Fig. 7 is a fourth block diagram illustrating a device for synchronizing data according to embodiments of the present disclosure.
Fig. 8 is a fifth block diagram illustrating a device for synchronizing data according to embodiments of the present disclosure.
Fig. 9 is a block diagram illustrating an electronic device according to embodiments of the present disclosure.

### EMBODIMENTS FOR IMPLEMENTING PRESENT DISCLOSURE

Technical solution of the present disclosure will be described clearly and completely in combination with drawings of embodiments of the present disclosure. Obviously, described embodiments herein are only a part of embodiments of the present invention, but not all embodiments. On the basis of the embodiments of the present disclosure, all other embodiments may be obtained by those skilled in the art without any inventive work, as far as they fall within the scope of the appended claims.

In an existing cloud backup data synchronization method, when data required to be synchronized stored in the terminal changes, it is required to synchronizing the changed data to the cloud server. For example, when a new short message received by the terminal, it is required to synchronize the short message to the cloud server.

However, since the data to be synchronized (such as communication record data or the like) in the terminal changes frequently, it is required to synchronize frequently the data to the cloud server, thereby causing a high load of the cloud server.

The present disclosure provides a method for synchronizing data, including the following. A data type of target data to be synchronized is determined. It is determined whether the data type of the target data is a preset data type. When the data type is the preset data type, the target data is added to a data cache area. After a preset interval, the target data in the data cache area is synchronized to a cloud server.

The method for synchronizing data further includes the following. When the data type of the target data is not the preset data type, a data synchronization request carrying the target data is sent to the cloud server, such that the target data is synchronized to the cloud server.

The method for synchronizing data further includes the following. When the data synchronization request fails to be sent, a failure reason why the data synchronization request fails to be sent is determined. It is determined whether the failure reason satisfies a preset condition. When the failure reason satisfies the preset condition, the target data is added to the data cache area. The target data in the data cache area is synchronized to the cloud server.

In one embodiment, determining whether the failure reason satisfies the preset condition includes the following. When the failure reason is that a network status is abnormal or a load of the cloud server is excessive, it is determined that the failure reason satisfies the preset condition. Synchronizing the target data in the data cache area to the cloud server includes the following. When the network state is recovered or the load of the cloud server is less than a preset threshold, the target data in the data cache area is synchronized to the cloud server.

In one embodiment, adding the target data to the data cache area includes the following. The target data is divided into a plurality of data blocks. The plurality of data blocks are assembled, to obtain a synchronization command recognizable by the cloud server. The synchronization command is added to a data cache area. Synchronizing the target data in the data cache area to the cloud server includes sending the synchronization command in the data cache area to the cloud server.

After the target data is added to the data cache area, and before the target data in the data cache area is synchronized to the cloud server, the method for synchronizing data further includes the following. During the preset interval, when it is detected that the target data changes, the target data in the data cache area is updated based on changed target data.

In one embodiment, updating the target data in the data cache area based on the changed target data includes the following. The changed target data is divided into a plurality of new data blocks, and the plurality of new data blocks are assembled to obtain a new synchronization command recognizable by the cloud server. The synchronization command in the data cache area is updated based on the new synchronization command.

Before the data type of the target data to be synchronized is determined, the method for synchronizing data further includes the following. The data is categorized based on a frequency of data changes or a number of data changes, to obtain the data type of the data.

In one embodiment, synchronizing the target data in the data cache area to the cloud server after the preset interval includes the following. A timing starts when the target data is added to the data cache area. When a time duration of the timing reaches a preset time duration, the target data in the data cache area is synchronized to the cloud server.

The present disclosure further provides a device for synchronizing data, including a first determining unit, configured to determine a data type of target data to be synchronized; a first judging unit, configured to determine whether the data type of the target data is a preset data type; an adding unit, configured, when the data type is the preset data type, to add the target data to a data cache area; and a first synchronizing unit, configured to synchronize the target data in the data cache area to the cloud server after a preset interval.

Embodiments of the present disclosure may be described from a point of view of a device for synchronizing data. The device for synchronizing data may be integrated in a terminal or other electronic device requiring for synchronizing data. The terminal may be a phone, a tablet computer or the like.

The device for synchronizing data may be integrated in the terminal in various manners. For example, the device may be installed in the terminal as a terminal application.

The present disclosure further provides a storage medium. The storage medium has instructions stored therein. The instructions are adapted to be loaded by a processor to execute the method for synchronizing data according to any one of above embodiments.

The present disclosure further provides an electronic device. The electronic device includes a processor and a memory. The memory is configured to store a plurality of instructions, and the processor is configured to load the instructions stored in the memory to execute the method for synchronizing data according to any one of above embodiments.

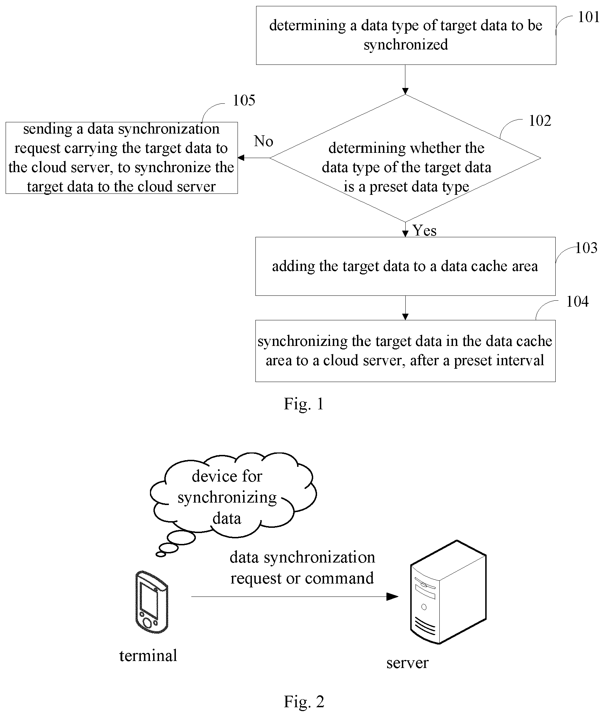

In at least one embodiment, there is provided a method for synchronizing data. As illustrated in Fig. 1, a flow chart of the method for synchronizing data includes the following.

In block 101, a data type of target data to be synchronized is determined. A data synchronization command for indicating the target data to be synchronized is received. The data type of the target data is determined based on the data synchronization command.

The data synchronization command may be triggered by a certain event. For example, the data synchronization command may be automatically triggered by a change of data. In at least one example, when it is detected that certain data (such as certain data specified to be backed up) changes, sending the data synchronization command is triggered. A device for synchronizing data may receive the data synchronization command. For example, when it is detected that short message data specified to be backed up changes (adding, deleting or modifying), a trigger for sending the data synchronization command is sent. The data synchronization command may be automatically triggered by the system. For example, sending the data synchronization command is automatically triggered at a preset time interval.

In addition, the data synchronization command may also be triggered by triggering a trigger interface, such as a preset triggering key or an input box of the terminal. For example, when the user clicks or slides a certain synchronization icon on a synchronization interface, creating the data synchronization command is triggered. The device for synchronizing data may receive the data synchronization command.

For example, the data may be categorized based on the data type in various categorization manners. In one embodiment, the data may be categorized based on a frequency of data changes or a number of data changes, to obtain the data type of the data. That is, before the block 101, the method may further include the following. The data is categorized based on the frequency of data changes or the number of data changes, to obtain the data type of the data.

In practical applications, the data required to be backed up may be categorized in examples, that is, the data specified to be backed up is categorized. For example, the data specified to be backed up, such as short message data, contact data, calling record data, and photo data, is categorized.

In a case that the data is categorized based on the frequency of data changes or the number of data changes, the data can be categorized into data types of high-frequent change, low-frequent change, and normal-frequent change. That is, the data type may include: a high-frequent data change, a low-frequent data change, a normal-frequent data change and other data types.

For example, the data type corresponding to the short message data may be categorized as the high-frequent data change, the data type corresponding to the contact data may be categorized as the low-frequent data change, the data type corresponding to the call record data may be categorized as the high-frequent data change, and the data type corresponding to the photo data may be categorized as the normal-frequent data change.

In addition, the data may be categorized based on attributions of the data (such as size) or according to an importance of the data in an example. For example, the data may be categorized as extremely important data, important data, normally important data, relatively important data or the like. That is, the data type may include: extremely importance, importance, normal importance, relatively importance and the like. The importance of the data may be acquired based on a type of an application having the data. For example, the importance of the data of a financial paying application is relatively high, and the importance of the data of a social application is relatively low.

The target data to be synchronized may be the data specified to be synchronized, for example, chatting record data, calling record data, photo data or the like. When the data synchronization is triggered by the change of data, the target data may be replaced with the changed data.

In block 102, it is determined whether the data type of the target data is a preset data type. If the data type of the target data is the preset data type, a block 103 is executed. Otherwise, a block 105 is executed.

For example, the data type of the target data may be compared with the preset data type. If the data type is same with the preset data type, it is determined that the data type is the preset data type. Otherwise, it is determined that the data type is not the preset data type.

The preset data type may be set based on actual requirements of a user. For example, categorizing the data based on the frequency of data changes or the number of data changes may be taken as an example. Considering that it is required to frequently synchronize the data frequently changing to the cloud server, in order to reduce the number of synchronizations of this type of data to the cloud server, this type of data may be stored in the data cache area in examples, and the data is synchronized after a time interval. That is, the preset data type may include the high-frequent data change, the normal-frequent data change or the like. When the data type of the target data is the high-frequent data change, it is determined that the data type of the target data is the preset data type.

As another example, categorizing the data based on the importance of the data is taken as an example. In order to reduce the number of data synchronizations to the cloud server, the data within a data area of a relatively low importance may be synchronized after an interval in examples. That is, the preset data type may include the normal importance or the relatively importance. When the data type of the target data is the normal importance, it is determined that the data type of the target data is the preset data type.

In block 103, the target data is added to the data cache area.

The data cache area is created by the terminal before the data is synchronized. For example, the data cache area may be created before the data synchronization command is received. For example, before the data synchronization command is received or the data type is determined, the method further includes receiving a cache area creation request, and creating a corresponding data cache area based on the cache area creation request. In at least one embodiment, the cache area creation request indicates a cache area or specifies a certain cache area.

In at least one example, the block "adding the target data into the data cache area" may include the following. The target data is copied. The copied target data is added to the data cache area. The target data is copied to the data cache area. The target data in embodiments may be the copied target data or may be the target data itself.

In order to improve data transmission speed or data synchronization speed, for example, not only the target data is copied to the data cache area, but also the target data is divided into a plurality of data blocks, and the plurality of data blocks are assembled into the synchronization command recognizable by the cloud server. Therefore, while the data is synchronized, it is only required to extract the synchronization command from the data cache area and to send the synchronization command to the server, without assembling the data, thereby improving the data synchronization speed. That is, the block "adding the target data to the data cache area" or the block "copying the target data to the data cache area" may include the following.

The target data is divided into a plurality of data blocks. The plurality of data blocks are assembled, to obtain the synchronization command or the synchronization request recognizable by the cloud server. The synchronization command or the synchronization request is added to the data cache area.

There may be various manners of dividing. For example, the target data may be divided into a plurality of data blocks having a same size. For example, the data blocks are assembled to obtain the synchronization command recognizable by the cloud server. That is, the data blocks may be assembled as a command or a data packet conforming to a communication protocol between the terminal and the server. The communication protocol may be a TCP/IP protocol. The block "assembling the data blocks" may include the following. A communication protocol document of the cloud server is acquired. The data blocks are assembled based on the communication protocol document.

In order to improve security of synchronizing the data, the target data to be synchronized is encrypted. For example, the target data may be encrypted, and the encrypted target data may be divided. That is, the block "dividing the target data into a plurality of data blocks" may include encrypting the target data, and dividing the encrypted target data into the plurality of data blocks.

As another example, the target data may be divided, and the data blocks are encrypted. That is, the block "assembling the data blocks" may include encrypting the data blocks, and assembling the encrypted data blocks.

As another example, the dividing and the assembling may be performed, and the synchronization command is encrypted. The block "adding the synchronization command to the data cache area" may include encrypting the synchronization command and adding the encrypted synchronization command to the data cache area.

Encrypting the data in embodiments may be performed using a secret key agreed upon with the cloud server.

In block 104, after the preset interval, the target data in the data cache area is synchronized to the clouds server.

For example, after the preset interval, the data synchronization request carrying the target data is sent by the cloud server, to synchronize the target data to the cloud server.

The preset interval may be set based on actual requirements, for example, 1 minute, 10 minutes, 5 minutes, 1 hour or the like. A start point of the preset interval may be a time point when the target data is completely added to the target cache area, or may be a time point when all synchronization commands are securely added to the data cache area. In practical applications, the start point may be any time point after determining that the data type is the preset data type.

The block "after the preset interval, synchronizing the target data in the data cache area to the cloud server" may include the following. A timing starts, when the target data is added to the data cache area. When a time duration of the timing reaches a preset time duration, the target data in the data cache area is synchronized to the cloud server.

Adding the target data to the data cache area includes dividing the data into a plurality of data blocks. When the data blocks are assembled to obtain the synchronization command, the block "synchronizing the target data in the data cache area to the cloud server" may include sending the synchronization command in the data cache area to the cloud server.

In block 105, the data synchronization request carrying the target data is sent to the cloud server, to synchronize the target data to the cloud server.

For example, when the data type of the target data is not the preset data type, the data may be synchronized in real time to the cloud server. That is, the data synchronization request is directly sent to the cloud server for synchronizing the data. For example, when the data type of the target data is the normal-frequent data change and the preset data type is the high-frequent data change, the data may be directly synchronized to the server, without caching the target data locally.

The cloud server may be frequently accessed since it is required to synchronize the data for many times due to failure of the data synchronization, causing an increase of the load of the cloud server. In order to solve the above problem, for example, the data to be synchronized may be added to the data cache area when the data synchronization is failed, and the data is synchronized again, so as to reduce the number of accesses to the cloud server, thereby reducing the load of the server. That is, the method may further include the following.

When the data synchronization request fails to be sent, a failure reason why the data synchronization request fails to be sent is determined. It is determined whether the failure reason satisfies a preset condition. When the failure reason satisfies the preset condition, the target data is added to the data cache area. The target data in the data cache area is synchronized to the cloud server.

The data synchronization request synchronizes the data when it is determined that the data type of the target data is not the preset data type, i.e., the data synchronization request in the block 105.

There are various failure reasons why the data synchronization request fails to be sent. For example, the failure reasons may include the following.

Network state is abnormal or instable. The manner for determining the failure reason is to acquire parameter information of the network state and detect whether the network state is stable based on the parameter information. The parameter information of the network state may include network delay, packet loss rate, jitter, or quality of service.

Load of the cloud server is excessive. The manner for determining the failure reason is to acquire the load of the cloud server, determining whether the load is greater than a preset threshold, and determining that the load of the cloud server is excessive when the load is greater than the preset threshold.

Usable resource of the terminal is little. The manner for determining the failure reason is to acquire resource parameters of the terminal, such as a usage ratio of a processor, an occupied ratio of the storage space or the like, and determining whether the usable resource of the terminal is little based on the resource parameters.

In the method, when the data synchronization request fails to be sent, the failure reason why the data synchronization request fails to be sent may be determined through the above manners of determining the failure reason.

There may be various preset conditions in embodiments, which may be set based on actual requirements. For example, since the data synchronization is failed due to the instable network or the excessive load of the server, the synchronization may be tried for many times, thereby causing the excessive load of the server. Therefore, in order to reduce the load of the server, the preset condition may be set as follows. The failure reason is that the network state is abnormal or the load of the cloud server is excessive. That is, the block "determining whether the failure reason satisfies the preset condition" may include the following.

When the failure reason is that the network state is abnormal or the load of the load server is excessive, it is determined that the failure reason satisfies the preset condition.

When the data synchronization request fails to be sent, the block "synchronizing the target data in the data cache area to the cloud server" may include the following. When the network sate is recovered to be normal or the load of the cloud server is less than the preset threshold, the target data in the data cache area is synchronized to the cloud server.

It may be determined whether the current data synchronization failure may cause that data synchronization of a synchronization re-sending mechanism may be failed based on the failure reason and a preset condition. Further, the data to be synchronized may be cached to the data cache area for this type of synchronization failures, and the data synchronization may be performed again. Not only the number of synchronizations to the cloud server may be reduced and the load of the cloud server may be decreased, but also other data that fails to be synchronized may be synchronized to the server timely, thereby improving the timeliness of the data synchronization.

For example, in order to ensure accuracy and consistence of synchronizing the data, when the data type is the preset data type, the target data is added to the data cache area and the data is synchronized after the preset interval, if the target data changes within the preset interval, the target data in the data cache area is updated. That is, when it is determined that the data type is the preset data type, between the block "adding the target data to the data cache area" and the block "synchronizing the target data in the data cache area to the cloud server", the method may further include the following.

When it is detected that the target data changes during the preset interval, the target data in the data cache area is updated with changed target data.

When adding the data to the data cache area includes adding the synchronization command to the data cache area, the block "updating the target data in the data cache area based on changed target data" may include the following. The changed target area is divided to a plurality of new data blocks, and the plurality of new data blocks are assembled, to obtain a new synchronization command recognizable by the cloud server. The synchronization command in the data cache area is updated based on the new synchronization command. For example, the synchronization command in the data cache area may be deleted. The new synchronization command is added to the data cache area, to achieve the update of the synchronization command.

As can be seen from above, in the present disclosure, the data type of the target data to be synchronized is determined. It is determined whether the data type of the target data is the preset data type. If the data type of the target data is not the preset data type, the target area is added to the data cache area. The target data in the data cache area is synchronized to the cloud server after the preset interval. The solution may add a certain data type of data to be synchronized to the data cache area, and may synchronize the certain data type of data to the cloud server after the preset interval. The number of the data synchronizations to the cloud server is reduced for the certain data type of the data and the access to the synchronization module may be reduced. Therefore, the load of the cloud server may be reduced and an interaction risk caused by frequent access to the synchronization module may be reduced.

In addition, in the present disclosure, the data to be synchronized may be added to the data cache area when the data fails to be synchronized since the network state is instable or the load of the server is excessive, and the data in the data cache area may be synchronized to the server again when the network state is recovered or the load of the server is decreased, thereby avoiding frequent data synchronization to the server when the data fails to be synchronized, thereby further reducing the load of the cloud server.

For example, the embodiment will be described on the basis of the method of the above embodiments.

The embodiment will be described in detail taking a device for synchronizing data according to embodiments of the present disclosure being integrated to a terminal as an example.

In at least one embodiment, referring to Fig. 2, there is provided a system for synchronizing data. The system includes a server and a device for synchronizing data. The device for synchronizing data may be integrated into a terminal. The terminal may be a phone, a tablet computer, a laptop computer or the like. The server and the terminal may be connected via a wired or wireless network.

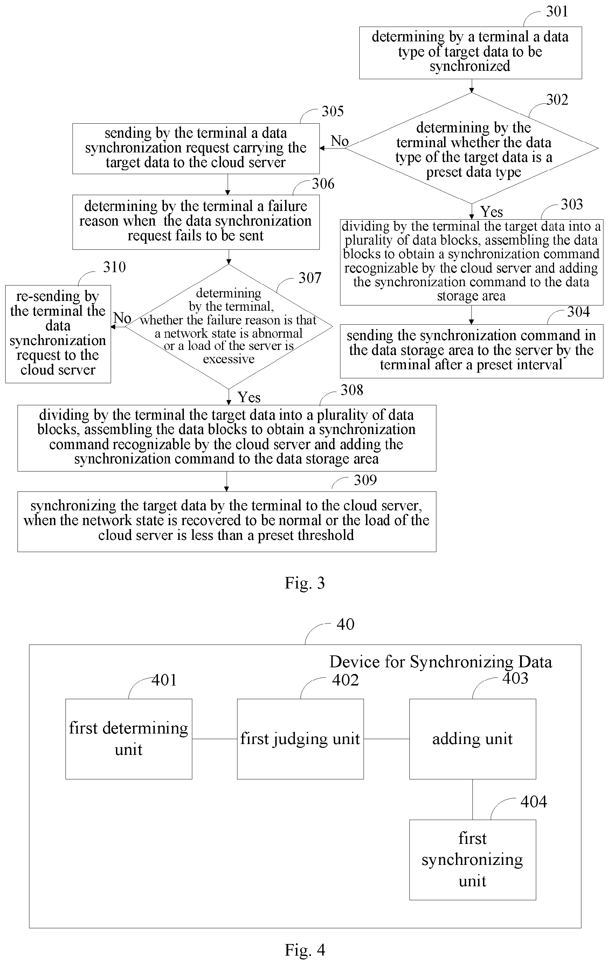

For example, on the basis of the system for synchronizing data, the method for synchronizing data according to the present disclosure will be described in detail. As illustrated in Fig. 3, a detailed flow chart of the method for synchronizing data may include the following.

In block 301, a data type of target data to be synchronized is determined by the terminal.

For example, a data synchronization command is received by the terminal, and the data type of the target data is determined based on the data synchronization command. The data synchronization command indicates the target data required to be synchronized. The data synchronization command may be triggered by a change of data, or may be triggered via an operation from a user.

The target data may be short message data, calling record data, contact data, or the like.

The data type may be obtained by categorizing the data in various categorization manners. For example, the data may be categorized based on a frequency of data changes or a number of data changes, to obtain the data type of the data.

For example, the data type may include: high-frequent data change, low-frequent data change, normal-frequent data change or the like.

In block 302, it is determined, by the terminal, whether the data type of the target data is the preset data type. When the data type of the target data is the preset data type, a block 303 is executed. When the data type of the target data is not the preset data type, a block 305 is executed.

The preset data type may be set based on an actual requirement of the user. For example, taking that the data is categorized based on the frequency of data changes or the number of data changes as an example, in order to reduce the number of synchronizations of this type of data to the cloud server, the preset data type may include the high-frequent data change, the normal-frequent data change or the like. When the data type of the target data is the high-frequent data change, it is determined that the data type of the target data is the preset data type.

In block 303. The target data is divided by the terminal into a plurality of data blocks. The data blocks are assembled to obtain the synchronization command recognizable by the cloud server. The synchronization command is added to the data cache area.

For example, the terminal may copy the target data and the divide the copied target date into the plurality of data blocks. Hereafter, the target data in embodiments may be the copied target data or may be the target data itself.

There are various manners of dividing. For example, the target data may be divided into the data blocks having a same size or different sizes.

In order to improve a speed of synchronizing data, in the present disclosure, the data blocks may be assembled based on a protocol in advance, to obtain the synchronization command recognizable by the server. For example, a communication protocol document with the cloud server may be acquired, and the data blocks may be assembled based on the communication protocol document.

In block 304, after the preset interval, the synchronization command in the data cache area is sent by the terminal to the server.

For example, after the preset interval, the synchronization command is sent to the cloud server to synchronize the target data to the cloud server.

The preset interval may be set based on actual requirements, for example, 2 minutes, 8 minutes, half an hour, two hours or the like. A start point of the preset interval may be any time point after determining that the data type is the preset data type.

For example, in order to improve accuracy of synchronizing data, when it is detected that the target data changes during the preset interval, the synchronization command is updated based on changed target data. For example, the changed target data is copied. The synchronization command in the data cache area is updated based on the copied target data.

In at least one example, the changed target data (or copied data of the changed target data) is divided into a plurality of new data blocks. The new data blocks are assembled to obtain a new synchronization command recognizable by the cloud server. The synchronization command in the data cache area is updated based on the new synchronization command. For example, the synchronization command in the data cache area may be replaced with the new synchronization command.

In block 305, a data synchronization request carrying the target data is sent by the terminal to the server.

For example, the data may be synchronized to the cloud server in real time when determining that the data type is not the preset data type, in order to ensure the timeliness of synchronizing the data.

The server may store the target data based on the data synchronization request.

In block 306, when the data request fails to be sent, the failure reason why the data synchronization request fails to be sent is determined by the terminal.

There are various failure reasons why the data synchronization request fails to be sent. For example, the failure reasons may include that the network state is abnormal or instable, the load of the cloud server is excessive, the usable resource of the terminal is little, the server is time-out, or the like.

In block 307, it is determined by the terminal whether the failure reason is that the network state is abnormal or instable or the load of the server is excessive. If the failure reason is that the network state is abnormal or instable or the load of the server is excessive, a block 308 is executed. If the network state is not abnormal or instable or the load of the server is excessive, a block 310 is executed.

In block 308, the target data is divided by the terminal into a plurality of data blocks. The plurality of data blocks are assembled, to obtain the synchronization command recognizable by the cloud server. The synchronization command is added to the data cache area.

In order to avoid frequently accessing the cloud server caused by multi-synchronization because the data synchronization is failed, the data to be synchronized is added to the data cache area when the data synchronization is failed, and the data is synchronized again, to reduce the number of accesses to the cloud server and to reduce the load of the server.

In block 309, the target data in the data cache area is synchronized by the terminal to the cloud server when the network state is recovered to be normal or the load of the cloud server is less than the preset threshold.

In block 310, the data synchronization request is re-sent by the terminal to the server.

As can be seen from the above, in the present disclosure, the data type of the target data to be synchronized is determined. It is determined whether the data type of the target data is the preset data type. If the data type of the target data is not the preset data type, the target data is added to the data cache area. The target data in the data cache area is synchronized to the cloud server after the preset interval. The solution may add the certain data type of data to be synchronized to the data cache area. The certain data type of data is synchronized to the cloud server after the preset interval, thereby reducing the number of data synchronization to the cloud server for the certain data type of data, and reducing the access to the synchronization module. Therefore, the load of the cloud server may be reduced and the interaction risk caused by frequent access to the synchronization module may be reduced.

In addition, in the present disclosure, the data to be synchronized may be further added to the data cache area when the data synchronization is failed because the network state is abnormal or the load of the server is excessive. The data in the data cache area is synchronized again to the server when the network state is recovered or the load of the server is reduced, thereby avoiding frequent data synchronizations to the server when the data synchronization is failed, and further reducing the load of the cloud server.

Embodiments of the present disclosure provide a device for synchronizing data, including : a first determining unit is configured to determine a data type of target data to be synchronized; a first judging unit is configured to determine whether the data type of the target data is a preset data type; an adding unit is configured to add the target data to a data cache area when it is determined by the first judging unit that the data type is the preset date type; a first synchronizing unit is configured to synchronize the target data in the data cache area to a cloud server after a preset interval.

In one example, the device for synchronizing data further includes a second synchronizing unit.

The second synchronizing unit is configured to send a data synchronization request carrying the target data to the cloud server to synchronize the target data to the cloud server, when it is determined by the first judging unit, that the target type is not the preset data type.

In one example, the device for synchronizing data further includes a second determining unit, a second judging unit and a third synchronizing unit.

The second determining unit is configured to determine a failure reason why the data synchronization request fails to be sent when the data synchronization request fails to be sent. The second judging unit is configured to determine whether the failure reason satisfies a preset condition. The third synchronizing unit is configured to add the target data to the data cache area and to synchronize the target data in the data cache area to the cloud server, when it is determined by the second judging unit that the failure reason satisfies the preset condition.

For example, the second judging unit is configured to determine that the failure reason satisfies the preset condition when the failure reason is that the network state is abnormal or the load of the cloud server is excessive.

The third synchronizing unit is configured to synchronize the target data in the data cache area to the cloud server when the network state is recovered or the load of the cloud server is less than a preset threshold.

For example, the adding unit is configured to execute the following. The target data is divided into a plurality of data blocks. The plurality of data blocks are assembled to obtain a synchronization command recognizable by the cloud server. The synchronization command is added to the data cache area.

The first synchronizing unit is configured to send the synchronization command in the data cache area to the cloud server.

In one example, the device for synchronizing data further includes an updating unit.

The updating unit is configured to update the target data in the data cache area based on changed target data when it is detected that the target data changes during the preset interval after the target data is added to the data cache area by the adding unit and before the target data in the data cache area is synchronized to the cloud server by the first synchronizing unit.

For example, the updating unit is configured to divide the changed target data into a plurality of new data blocks and to assemble the plurality of new data blocks to obtain a new synchronization command recognizable by the cloud server, and to update the synchronization command in the data cache area based on the new synchronization command.

In one example, the device for synchronizing data further includes a categorizing unit.

The categorizing unit is configured to categorize the data based on a frequency of data changes or a number of data changes to obtain the data type of the data, before the data type of the target data to be synchronized is determined by the first determining unit.

For example, the first synchronizing unit is configured to start a timing when the target data is added to the data cache area, and to synchronize the target data in the data cache area to the cloud server when a time duration of the timing reaches a preset time duration.

In order to implement the above method better, for example, there is further provided a device 40 for synchronizing data. As illustrated in Fig. 4, the device 40 for synchronizing data includes a first determining unit 401, a first judging unit 402, an adding unit 403 and a first synchronizing unit 404.

The first determining unit 401 is configured to determine a data type of target data to be synchronized.

The first judging unit 402 is configured to determine whether the data type of the target data is a preset data type.

The adding unit 403 is configured to add the target data to a target cache area when it is determined by the first judging unit 402 that the data type is the preset date type.

The first synchronizing unit 404 is configured to synchronize the target data in the data cache area to a cloud server after a preset interval.

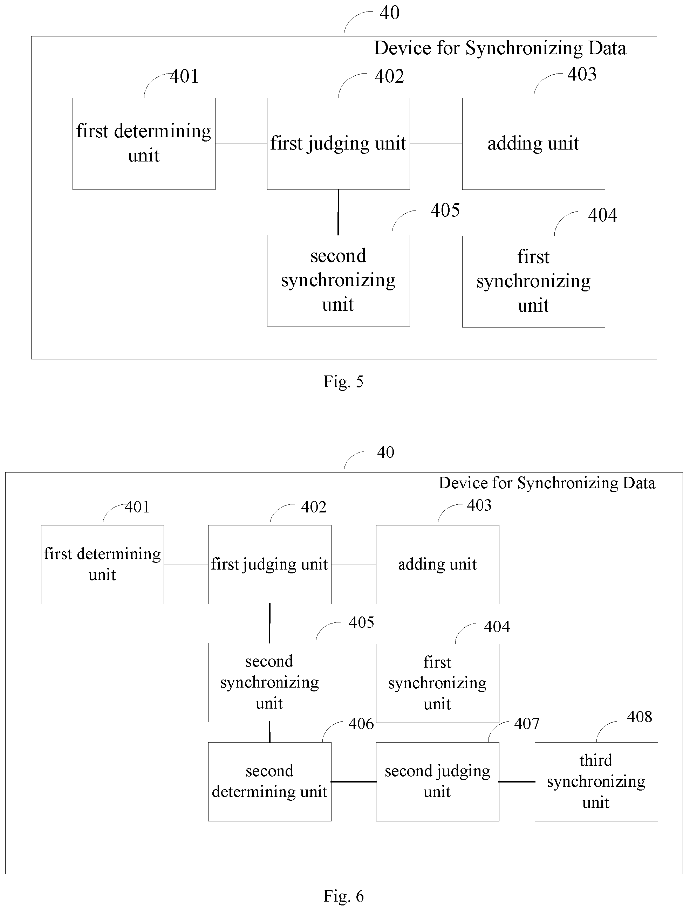

In one embodiment, referring to Fig. 5, in order to ensure real-time data synchronization, the device for synchronizing data according to embodiments further include a second synchronizing unit 405.

The second synchronizing unit 405 is configured to send a data synchronization request carrying the target data to the cloud server to synchronize the target data to the cloud server, when it is determined by the first judging unit, that the target type is not the preset data type.

In one embodiment, referring to Fig. 6, in order to reduce the times of frequently trying to synchronize to the server caused by failure synchronizations and to reduce the load of the server, the device for synchronizing data according to embodiments may further include a second determining unit 406, a second judging unit 407 and a third synchronizing unit 408.

The second determining unit 406 is configured to determine a failure reason why the data synchronization request fails to be sent when the data synchronization request fails to be sent.

The second judging unit 407 is configured to determine whether the failure reason satisfies a preset condition.

The third synchronizing unit 408 is configured to add the target data to the data cache area, and to synchronize the target data in the data cache area to the cloud server, when it is determined by the second judging unit 407 that the failure reason does not satisfy the preset condition.

In at least one example, the second judging unit 407 is configured to determine that the failure reason satisfies the preset condition, when the failure reason is that a network state is abnormal or a load of the cloud server is excessive.

Furthermore, the third synchronizing unit 408 is configured to synchronize the target data in the data cache area to the cloud server when the network state is recovered or the load of the cloud server is less than a preset threshold.

In one example, in order to improve a speed of synchronizing data, the adding unit 403 in embodiments may be configured to execute the following.

The target data is divided into a plurality of data blocks. The plurality of data blocks are assembled to obtain a synchronization command recognizable by the cloud server. The synchronization command is added to a data cache area.

The first synchronizing unit is configured to send the synchronization command in the data cache area to the cloud server.

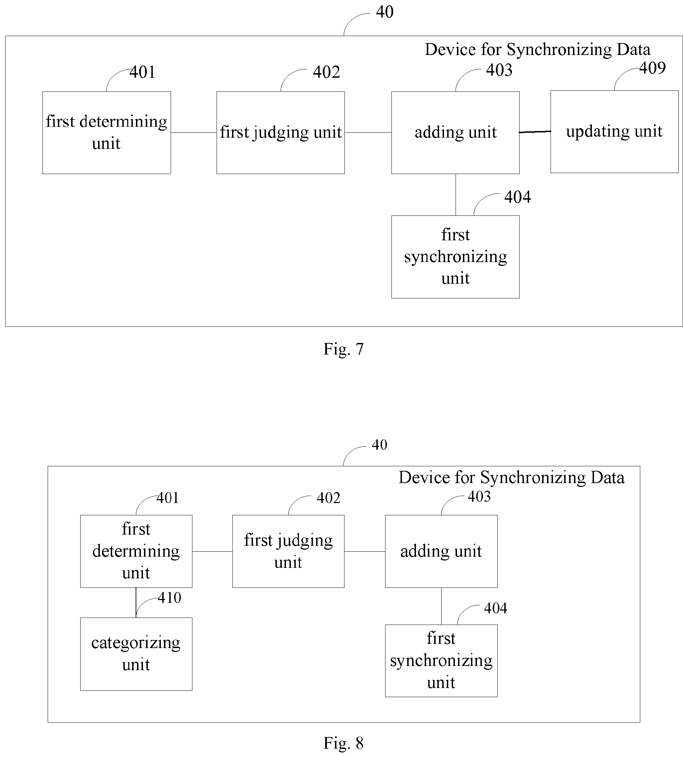

In one embodiment, in order to improve accuracy of synchronizing data, referring to Fig. 7, the device for synchronizing data according to embodiments may further include an updating unit 409.

The updating unit 409 is configured, after the target data is added to the data cache area by the adding unit 403 and before the target data in the data cache area to the cloud server by the first synchronizing unit 404, update the target data in the data cache area based on changed target data when it is detected that the target data changes during the preset interval.

In one example, the updating unit 409 may be configured to divide the changed target data into a plurality of new data blocks, assemble the plurality of new data blocks to obtain a new synchronization command recognizable by the cloud server; and update the synchronization command in the data cache area based on the new synchronization command.

In one embodiment, referring to Fig. 8, the device for synchronizing data may further include a categorizing unit 410. The categorizing unit 410 is configured to categorize data based on a frequency of data changes or a number of data changes, to obtain the data type of the data, before the data type of the target data to be synchronized is determined by the first determining unit 401.

In one example, the first synchronizing unit 404 may be configured to start a timing when the target data is added to the data cache area; and to synchronize the target data in the data cache area to the cloud server when a time duration of the timing reaches a preset time duration.

In implementations, the above units may be realized separately as individual entities, or may be realized as a single or several entities through combination. Implementations of the above units may be referred to method embodiments described above, which are not elaborated herein.

The device for synchronizing data may be integrated into a terminal, such as integrated into a phone, a tablet computer, a laptop computer or the like.

As can be seen, in the present disclosure, the data type of the target data to be synchronized is determined via the first determination unit 40. It is determined via the first judging unit 402, whether the data type of the target data is the preset data type. The target data is added by the adding unit 403 to the data cache area when the data type is the preset data type. The target data in the data cache area is synchronized via the first synchronizing unit 404 to the cloud server after the preset interval. This solution may add a certain data type of data to be synchronized to the data cache area, and may synchronize the certain data type of data to the cloud server after the preset interval, thereby reducing the number of data synchronizations to the cloud server for the certain data type of data, and reducing accesses to a synchronization module. Therefore, the load of the cloud server may be reduced and an interaction risk caused by frequent access to the synchronization module may be reduced.

In addition, in the present disclosure, the data to be synchronized may be added to the data cache area when the data fails to be synchronized since the network state is instable or the load of the server is excessive. The data in the data cache area may be synchronized again to the server when the network state is recovered or the load of the server is decreased. Therefore, frequent data synchronizations to the server may be avoided when the data synchronization is failed, and further reducing the load of the cloud server.

Embodiments of the present disclosure further provide an electronic device including a processor and a memory. The memory is configured to store a plurality of instructions. The processor is configured to load the instructions stored in the memory to execute the method for synchronizing data according to any one of embodiments of the present disclosure.

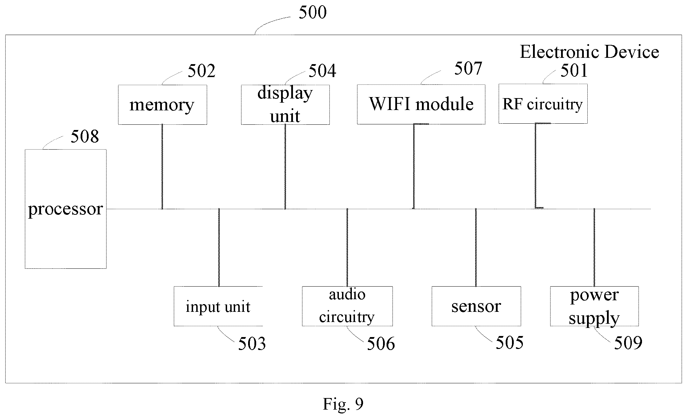

For example, embodiments of the present disclosure further provide an electronic device. The electronic device may be a terminal, such as a tablet computer, a phone or other mobile terminals, as illustrated in Fig. 9. Fig. 9 is a schematic diagram illustrating a mobile terminal according to embodiments of the present disclosure. The mobile terminal 500 may include a radio frequency (RF) circuitry 501, a memory 502 having one or more computer readable storage medium, an input unit 503, a display unit 504, sensors 505, an audio circuitry 506, a wireless fidelity (WIFI) module 507, a processor 508 having one or more processing kernels, and a power supply 509. It may be understood by those skilled in the art that, the structure illustrated in Fig. 9 does not limit the structure of the mobile terminal, which may include less or more components than those illustrated in Fig. 9 or include combinations thereof, or have a different arrangement of components.

The RF circuitry 501 may be configured to receive or transmit a signal during a process of transmitting or receiving a message or making a call. For example, after downlink data of a base station is received, the downlink data is transmitted to one or more processors 508 for processing. Additionally, uplink data related is transmitted to the base station. In general, the RF circuitry 501 includes, but not limited to, an antenna, at least one amplifier, a tuner, one or more oscillators, a subscriber identity module (SIM) card, a transceiver, a coupler, a low noise amplifier (LNA), a diplexer and the like. Furthermore, the RF circuitry 501 may be further configured to communicate with other devices via wireless communication and network. The wireless communication may adopt any communication standard or protocol, which includes, but not limited to, global system of mobile communication (GSM), general packet radio service (GPRS), code division multiple access (CDMA), wideband code division multiple access (WCDMA), long term evolution (LTE), e-mail, short messaging service (SMS) and the like.

The memory 502 may be configured to store application programs or modules. The application programs stored in the memory 502 includes executable codes. The application programs may be combined into various functional modules. The processor 508 is configured to execute various functional applications and data processes by running the applications programs stored in the memory 502. The memory 502 may include a program storage region and a data storage region. The program storage region may store an operation system, at least one function-required application programs (such as sound playing function, image displaying function) and the like. The data storage region may store data produced by using the mobile terminal (such as audio data, a contact book) and the like. In addition, the memory 502 may include a high speed random access memory and may include a non-volatility memory, such as at least one disk memory, a flash memory, or other volatility solid state memory. Accordingly, the memory 502 may further include a memory controller to provide accesses by the processor 503 and the input unit 503 to the memory 502.

The input unit 503 may be configured to receive figures, character information or user characteristic information (such as fingerprint) inputted and generate a keyboard signal input, a mouse single input, an operating level signal input, an optical signal input or a trackball signal input related to a user setup or functional control. In one example, the input unit 503 may include touch-sensitive surface and other input devices. The touch-sensitive surface may be called as a touch display screen or a touch panel, and may be configured to collect touch operations near or on the touch-sensitive surface (such as an operation of a user on the touch-sensitive surface or near the touch-sensitive surface with a finger, a stylus or other suitable objects or attachments), and drive corresponding connected device based on a preset program. In at least one example, the touch-sensitive surface may include a touch detection device and a touch controller. The touch detection device is configured to detect an orientation of the user's touch, detect a signal caused by the touch operation and send the signal to the touch controller. The touch controller is configured to receive the touch information on the touch detection device, convert the touch information to touch point coordinates, and send the touch point coordinates to the processor 508. Furthermore, the touch controller may receive and execute a command sent from the processor 508. In addition, the touch-sensitive surface may be implemented as resistance typed, capacitive typed, infrared typed and surface acoustic wave typed. In addition to the touch-sensitive surface, the input unit 503 may further include other input devices. In detail, the other input devices may include, but not limited to, one or more of a physical keyboard, a functional key (such as a volume control key and the like), a fingerprint recognition module, a trackball, a mouse, an operating level and the like.

The display unit 504 may be configured to display information inputted by the user or information provided to the user or various graphical user interfaces of the mobile terminal. The graphical user interfaces may be consisted of graphs, text, icons, videos and others. The display unit 504 may include a display panel. In at least one example, the display panel may be configured as a liquid crystal display (LCD), an organic light-emitting diode (OLED) and the like. Further, the touch-sensitive surface may cover the display panel. When the touch-sensitive surface detects the touch operation on or near the touch-sensitive surface, the touch operation is transmitted to the processor 508 to determine a type of the touch event. Thereafter, the processor 508 provides a corresponding visual output on the display panel based on the type of the touch event. Although the touch-sensitive surface and the display panel are used as two separate components to realize an input and output functions illustrated in Fig. 9, in certain examples, the touch-sensitive surface and the display panel may be integrated to realize the input and output functions.

The mobile terminal may further include at least one sensor 505, such as an optical sensor, a motion sensor and other sensors. In detail, the optical sensor may include a surrounding light sensor and a proximity sensor. The surrounding light sensor may adjust a brightness of the display panel based on brightness of the surrounding lights. The proximity sensor may light the display panel and/or backlight unit off when the mobile terminal moves near ears of the user. As a kind of motion sensor, a gravity acceleration sensor may detect acceleration values in various directions (generally three axes), measure a value and a direction of gravity when being static, and identify a status of the phone (such as horizontal screen and vertical screen switching, related games, magnetometer status calibration), shake-related functions (such as a pedometer, a knocking) and the like. Furthermore, the mobile terminal may be configured with a gyroscope, a barometer, a thermometer, an infrared sensor and other sensors, which are not elaborated herein.

The audio circuitry 506 may be configured to provide an audio interface between the user and the mobile terminal via a loudspeaker and a microphone. The audio circuitry 506 may transmit an electrical signal transformed from received audio data to the loudspeaker. The loudspeaker converts the electrical signal to a sound signal and output the sound signal. In another aspect, the microphone may be configured to transform a collected sound single to an electrical signal. The audio circuitry 506 receives and transforms the electrical signal to audio data and outputs the audio data to the processor 508 for processed. The audio data processed by the processor 508 may be transmitted to another mobile terminal via the RF circuitry 501 or may be stored in the memory 502 to be subsequently processed. The audio circuitry 506 may further include an earplug, to provide an external earphone for communication with the mobile terminal.

The WiFi is a short distance wireless communication technology. The mobile terminal may help the user to receive or send an e-mail, search webpages, access to stream medium via the WiFi module 507. The WiFi module 507 provides a wireless broadband Internet access. Although the WiFi module 507 is illustrated in Fig. 9, it may be understood that, the WiFi module 507 is not necessary for the mobile terminal, thus it may be omitted based on requirements without changing an essential scope of the present disclosure.

The processor 508 is a control center of the mobile terminal, which utilizes various interfaces and wires to connect various parts of the mobile terminal. By running or executing the application programs stored in the memory 502, and by calling data stored in the memory 502, various functions and data processing functions of the mobile terminal may be executed, thus monitoring the mobile terminal entirely. In at least one example, the processor 508 may include one or more processing kernels. In one example, the processor 508 may be integrated with an application processor or a modem processor. The application processor is configured to process the operation system, a user interface and an application program. The modem processor is configured to process wireless communication. It may be understood that, the above modem controller may be not integrated in the processor 508.

The mobile terminal may further include the power supply 509 (such as a battery), configured to provide power to various components. In an example, the power supply may be logically connected to the processor 508 via a power management system, thereby managing functions, such as charging, discharging and power consumption via the power management system. The power supply 509 may further include one or more direct current power supplies or alternative current poser supplies, one or more re-chargeable systems, one or more power supply failure detection circuitries, one or more power supply transducers or inverters, one or more power supply status indicators or the like.

Although not illustrated in Fig. 9, the mobile terminal may further include a camera, a Bluetooth module or the like, which is not elaborated herein.

For example, the processor 508 of the mobile terminal may load the executable codes corresponding to progresses of one or more application programs to the memory 502, and run the application programs stored in the memory 502, to execute various functions as follows.

A data type of target data to be synchronized is determined. It is determined whether the data type of the target data is a preset data type. If the data type of the target data is not the preset data type, the target data is added to a data cache area. The target data in the data cache area is synchronized to the cloud server after a preset interval.

The processor 508 may be further configured to execute following functions. When the data type of the target data is not the preset data type, a data synchronization request carrying the target data is sent to the cloud server, to synchronize the target data to the cloud server.

In some implementations, the processor 508 is further configured to execute following functions. When sending the data synchronization request is failed, a failure reason why sending the data synchronization request is failed is determined.

It is determined whether the failure reason satisfies a preset condition.

When the failure reason satisfies the preset condition, the target data is added to the data cache area.

The target data in the data cache area is synchronized to the cloud server.

In some implementations, the processor 508 may be configured to divide the target data into a plurality of data blocks, to assemble the plurality of data blocks to obtain a synchronization command recognizable by the cloud server, to add the synchronization command to a data cache area, and to send the synchronization command in the data cache area to the cloud server.

In some examples, the processor 508 is further configured to execute following functions. After the target data is added to the data cache area, and before the target data in the data cache area is synchronized to the cloud server, the target data in the data cache area is updated based on updated target data when it is detected that the target data changes during the preset interval.

In above embodiments, descriptions made to above embodiments have different emphasis. For those that are not described in detail in some embodiments, detailed descriptions made to the method for synchronizing data may be referred to, which are not elaborated herein.

Those skilled in the art may understand that all or a part of blocks in various method of the above embodiments may be completed by instructing related hardware via instructions. The programs may be stored in a computer readable storage medium. The storage medium may include a read only memory (ROM), a random access memory (RAM), a magnetic disk, an optical disk or the like.

Detailed descriptions are made to the above method for synchronizing data, a device for synchronizing data, a storage medium and an electronic device according to embodiments of the present disclosure. Specific examples are used in the present disclosure to illustrate principles and implementation manners of the present application. The above descriptions of embodiments are only used for understanding the method of the present disclosure and its key thought. For those skilled in the art, according to the thought of the present disclosure, specific implementation manners and application scopes may vary as far as they fall within the scope of the appended claims.

## Claims

1. A method for synchronizing data, comprising:
determining (101, 301) a data type of target data to be synchronized, wherein the data type is obtained based on a frequency of data changes or a number of data changes, the target data is indicated by a data synchronization command received;
determining (102, 302) whether the data type of the target data is a preset data type;
adding (103, 303) the target data to a data cache area when the data type of the target data is the preset data type, wherein the data cache area is created by a terminal based on a cache area creation request received; synchronizing (104, 304) the target data in the data cache area to a cloud server, after a preset interval comprising: starting a timing when the target data is added to the data cache area, and synchronizing the target data in the data cache area to the cloud server when a time duration of the timing reaches a preset time duration; and
sending (305) a data synchronization request carrying the target data to the cloud server to synchronize the target data to the cloud server when the data type of the target data is not the preset data type.

2. The method of claim 1, further comprising:
determining (306) a failure reason when the data synchronization request fails to be sent;
determining whether the failure reason satisfies a preset condition;
adding the target data to the data cache area when the failure reason satisfies the preset condition; and
synchronizing the target data in the data cache area to the cloud server.

3. The method of claim 2, wherein determining whether the failure reason satisfies the preset condition comprises:
determining (307) that the failure reason satisfies the preset condition when a network state is abnormal or a load of the cloud server is greater than a preset threshold; wherein abnormal network state is detected based on parameter information of the network state, and the parameter information at least comprises network delay, packet loss rate, jitter, and quality of service; and
wherein synchronizing the target data in the data cache area to the cloud server comprises:
synchronizing (309) the target data in the data cache area to the cloud server when the network state is recovered or the load of the cloud server is less than the preset threshold.

4. The method of claim 1, wherein adding the target data to the data cache area comprises:
dividing (308) the target data into a plurality of data blocks;
assembling (308) the plurality of data blocks to obtain a synchronization command recognizable by the cloud server;
adding (308) the synchronization command to a data cache area; and
sending the synchronization command in the data cache area to the cloud server.

5. The method of any one of claim 1, wherein,
after adding the target data to the data cache area and before synchronizing the target data in the data cache area to the cloud server, the method further comprises: updating the target data in the data cache area based on changes in the target data when the target data changes during the preset interval.

6. The method of claim 5, wherein updating the target data in the data cache area based on the changes in the target data comprises:
dividing changed target data into a plurality of new data blocks;
assembling the plurality of new data blocks to obtain a new synchronization command recognizable by the cloud server; and
updating the synchronization command in the data cache area based on the new synchronization command.

7. A device (40) for synchronizing data, comprising:
a first determining unit (401), configured to determine a data type of target data to be synchronized, wherein the data type is obtained based on a frequency of data changes or a number of data changes, the target data is indicated by a data synchronization command received;
a first judging unit (402), configured to determine whether the data type of the target data is a preset data type;
an adding unit (403), configured, when the data type is the preset data type, to add the target data to a data cache area, wherein the data cache area is created by a terminal based on a cache area creation request received;
a first synchronizing unit (404), configured to synchronize the target data in the data cache area to the cloud server after a preset interval by starting a timing when the target data is added to the data cache area, and synchronizing the target data in the data cache area to the cloud server when a time duration of the timing reaches a preset time duration; and
a second synchronizing unit (405), configured to send a data synchronization request carrying the target data to the cloud server to synchronize the target data to the cloud server, when the data type is not the preset data type.

8. The device (40) of claim 7, further comprising a second determining unit (406), a second judging unit (407) and a third synchronizing unit (408);
the second determining unit (406) is configured, to determine a failure reason when the data synchronization request fails to be sent;
the second judging unit (407) is configured to, determine whether the failure reason satisfies a preset condition; and
the third synchronizing unit (408) is configured to, add the target data to the data cache area, and to synchronize the target data in the data cache area to the cloud server, when the failure reason does not satisfy the preset condition.

9. The device (40) of claim 8, wherein the second judging unit (407) is configured to determine that the failure reason satisfies the preset condition when a network state is abnormal or a load of the cloud server is greater than a preset threshold; wherein abnormal network state is detected based on parameter information of the network state, and the parameter information at least comprises network delay, packet loss rate, jitter, and quality of service; and
the third synchronizing unit (408) is configured to synchronize the target data in the data cache area to the cloud server when the network state is recovered or the load of the cloud server is less than the preset threshold.

10. The device (40) of any one of claim 7, wherein the adding unit (403) is configured to:
divide the target data into a plurality of data blocks;
assemble the plurality of data blocks to obtain a synchronization command recognizable by the cloud server;
add the synchronization command to a data cache area; and
wherein the first synchronizing unit is configured to send the synchronization command in the data cache area to the cloud server.

11. A storage medium, having a plurality of instructions stored therein, wherein the instructions are adapted to be loaded by a processor to execute a method for synchronizing data of any one of claims 1 to 6.

## Patentansprüche

1. Verfahren zur Datensynchronisation, das Folgendes umfasst:
Bestimmen (101, 301) eines Datentyps von zu synchronisierenden Zieldaten, wobei der Datentyp basierend auf einer Häufigkeit von Datenänderungen oder einer Anzahl von Datenänderungen erhalten wird, wobei die Zieldaten durch einen empfangenen Datensynchronisationsbefehl angegeben werden;
Bestimmen (102, 302), ob der Datentyp der Zieldaten ein voreingestellter Datentyp ist;
Hinzufügen (103, 303) der Zieldaten zu einem Datencachebereich, wenn der Datentyp der Zieldaten der voreingestellte Datentyp ist, wobei der Datencachebereich durch ein Endgerät basierend auf einer empfangenen Cachebereichserzeugungsanforderung erzeugt wird;
Synchronisieren (104, 304) der Zieldaten im Datencachebereich mit einem Cloud-Server nach einem voreingestellten Intervall, umfassend:
Starten eines Timings, wenn die Zieldaten zu dem Datencachebereich hinzugefügt werden, und Synchronisieren der Zieldaten im Datencachebereich mit dem Cloud-Server, wenn eine Zeitdauer des Timings eine voreingestellte Zeitdauer erreicht; und
Senden (305) einer Datensynchronisationsanforderung, die die Zieldaten führt, zu dem Cloud-Server, um die Zieldaten mit dem Cloud-Server zu synchronisieren, wenn der Datentyp der Zieldaten nicht der voreingestellte Datentyp ist.

2. Verfahren nach Anspruch 1, das ferner Folgendes umfasst:
Bestimmen (306) eines Fehlschlaggrunds, wenn daran gescheitert wird, die Datensynchronisationsanforderung zu senden;
Bestimmen, ob der Fehlschlaggrund eine voreingestellte Bedingung erfüllt;
Hinzufügen der Zieldaten zu dem Datencachebereich, wenn der Fehlschlaggrund die voreingestellte Bedingung erfüllt; und
Synchronisieren der Zieldaten im Datencachebereich mit dem Cloud-Server.

3. Verfahren nach Anspruch 2, wobei das Bestimmen, ob der Fehlschlaggrund die voreingestellte Bedingung erfüllt, Folgendes umfasst:
Bestimmen (307), dass der Fehlschlaggrund die voreingestellte Bedingung erfüllt, wenn ein Netzwerkzustand anormal ist oder eine Belastung des Cloud-Servers größer als eine voreingestellte Schwelle ist; wobei der anormale Netzwerkzustand basierend auf Parameterinformationen des Netzwerkzustands detektiert wird, und die Parameterinformationen zumindest Netzwerkverzögerung, Paketverlustrate, Jitter und Dienstgüte umfassen; und
wobei das Synchronisieren der Zieldaten im Datencachebereich mit dem Cloud-Server Folgendes umfasst:
Synchronisieren (309) der Zieldaten im Datencachebereich mit dem Cloud-Server, wenn der Netzwerkzustand wiederhergestellt wird oder die Belastung des Cloud-Servers geringer als die voreingestellte Schwelle ist.

4. Verfahren nach Anspruch 1, wobei das Hinzufügen der Zieldaten zu dem Datencachebereich Folgendes umfasst:
Teilen (308) der Zieldaten in mehrere Datenblöcke;
Zusammensetzen (308) der mehreren Datenblöcke, um einen durch den Cloud-Server erkennbaren Synchronisationsbefehl zu erhalten;
Hinzufügen (308) des Synchronisationsbefehls zu einem Datencachebereich; und
Senden des Synchronisationsbefehls im Datencachebereich zu dem Cloud-Server.

5. Verfahren nach einem von Anspruch 1, wobei das Verfahren nach dem Hinzufügen der Zieldaten zu dem Datencachebereich und vor dem Synchronisieren der Zieldaten im Datencachebereich mit dem Cloud-Server ferner Folgendes umfasst: Aktualisieren der Zieldaten im Datencachebereich basierend auf Änderungen in den Zieldaten, wenn sich die Zieldaten während des voreingestellten Intervalls ändern.

6. Verfahren nach Anspruch 5, wobei das Aktualisieren der Zieldaten im Datencachebereich basierend auf Änderungen in den Zieldaten Folgendes umfasst:
Teilen geänderter Zieldaten in mehrere neue Datenblöcke;
Zusammensetzen der mehreren neuen Datenblöcke, um einen neuen durch den Cloud-Server erkennbaren Synchronisationsbefehl zu erhalten; und
Aktualisieren des Synchronisationsbefehls im Datencachebereich basierend auf dem neuen Synchronisationsbefehl.

7. Vorrichtung (40) zur Datensynchronisation, die Folgendes umfasst:
eine erste Bestimmungseinheit (401), die ausgelegt ist zum Bestimmen eines Datentyps von zu synchronisierenden Zieldaten, wobei der Datentyp basierend auf einer Häufigkeit von Datenänderungen oder einer Anzahl von Datenänderungen erhalten wird, wobei die Zieldaten durch einen empfangenen Datensynchronisationsbefehl angegeben werden;
eine erste Beurteilungseinheit (402), die ausgelegt ist zum Bestimmen, ob der Datentyp der Zieldaten ein voreingestellter Datentyp ist;
eine Hinzufügungseinheit (403), die ausgelegt ist, wenn der Datentyp der voreingestellte Datentyp ist, zum Hinzufügen der Zieldaten zu einem Datencachebereich, wobei der Datencachebereich durch ein Endgerät basierend auf einer empfangenen Cachebereichserzeugungsanforderung erzeugt wird;
eine erste Synchronisierungseinheit (404), die ausgelegt ist zum Synchronisieren der Zieldaten im Datencachebereich mit einem Cloud-Server nach einem voreingestellten Intervall durch Starten eines Timings, wenn die Zieldaten zu dem Datencachebereich hinzugefügt werden, und Synchronisieren der Zieldaten im Datencachebereich mit dem Cloud-Server, wenn eine Zeitdauer des Timings eine voreingestellte Zeitdauer erreicht; und
eine zweite Synchronisierungseinheit (405), die ausgelegt ist zum Senden einer Datensynchronisationsanforderung, die die Zieldaten führt, zu dem Cloud-Server, um die Zieldaten mit dem Cloud-Server zu synchronisieren, wenn der Datentyp nicht der voreingestellte Datentyp ist.

8. Vorrichtung (40) nach Anspruch 7, die ferner eine zweite Bestimmungseinheit (406), eine zweite Beurteilungseinheit (407) und eine dritte Synchronisierungseinheit (408) umfasst;
wobei die zweite Bestimmungseinheit (406) ausgelegt ist zum Bestimmen eines Fehlschlaggrunds, wenn daran gescheitert wird, die Datensynchronisationsanforderung zu senden;
die zweite Beurteilungseinheit (407) ausgelegt ist zum Bestimmen, ob der Fehlschlaggrund eine voreingestellte Bedingung erfüllt; und
die dritte Synchronisierungseinheit (408) ausgelegt ist zum Hinzufügen der Zieldaten zu dem Datencachebereich und Synchronisieren der Zieldaten im Datencachebereich mit dem Cloud-Server, wenn der Fehlschlaggrund nicht die voreingestellte Bedingung erfüllt.

9. Vorrichtung (40) nach Anspruch 8, wobei die zweite Beurteilungseinheit (407) ausgelegt ist zum Bestimmen, dass der Fehlschlaggrund die voreingestellte Bedingung erfüllt, wenn ein Netzwerkzustand anormal ist oder eine Belastung des Cloud-Servers größer als eine voreingestellte Schwelle ist; wobei der anormale Netzwerkzustand basierend auf Parameterinformationen des Netzwerkzustands detektiert wird, und die Parameterinformationen zumindest Netzwerkverzögerung, Paketverlustrate, Jitter und Dienstgüte umfassen; und
die dritte Synchronisierungseinheit (408) ausgelegt ist zum Synchronisieren der Zieldaten im Datencachebereich mit dem Cloud-Server, wenn der Netzwerkzustand wiederhergestellt wird oder die Belastung des Cloud-Servers geringer als die voreingestellte Schwelle ist.

10. Vorrichtung (40) nach einem von Anspruch 7, wobei die Hinzufügungseinheit (403) ausgelegt ist zum:
Teilen der Zieldaten in mehrere Datenblöcke;
Zusammensetzen der mehreren Datenblöcke, um einen durch den Cloud-Server erkennbaren Synchronisationsbefehl zu erhalten;
Hinzufügen des Synchronisationsbefehls zu einem Datencachebereich; und
wobei die erste Synchronisierungseinheit ausgelegt ist zum Senden des Synchronisationsbefehls im Datencachebereich zu dem Cloud-Server.

11. Speicherungsmedium mit mehreren darin gespeicherten Anweisungen, wobei die Anweisungen dazu geeignet sind, durch einen Prozessor geladen zu werden, um ein Verfahren zur Datensynchronisation nach einem der Ansprüche 1 bis 6 auszuführen.

## Revendications

1. Procédé de synchronisation de données, comprenant :
la détermination (101, 301) d'un type de données de données cibles à synchroniser, le type de données étant obtenu sur la base d'une fréquence de changements de données ou d'un nombre de changements de données, les données cibles étant indiquées par une commande de synchronisation de données reçue ;
la détermination (102, 302) que le type de données des données cibles est ou non un type de données prédéfini ;
l'ajout (103, 303) des données cibles à une zone de mémoire cache de données quand le type de données des données cibles est le type de données prédéfini, la zone de mémoire cache de données étant créée par un terminal sur la base d'une demande de création de zone de mémoire cache reçue ; la synchronisation (104, 304) des données cibles dans la zone de mémoire cache de données avec un serveur en nuage, après un intervalle prédéfini comprenant : le lancement d'une temporisation quand les données cibles sont ajoutées à la zone de mémoire cache de données, et la synchronisation des données cibles dans la zone de mémoire cache de données avec le serveur en nuage quand une durée de la temporisation atteint une durée prédéfinie ; et
l'envoi (305) d'une demande de synchronisation de données portant les données cibles au serveur en nuage pour synchroniser les données cibles avec le serveur en nuage quand le type de données des données cibles n'est pas le type de données prédéfini.

2. Procédé selon la revendication 1, comprenant en outre :
la détermination (306) d'une raison de défaillance quand la demande de synchronisation de données n'est pas envoyée ;
la détermination que la raison de défaillance satisfait ou non une condition prédéfinie ;
l'ajout des données cibles à la zone de mémoire cache de données quand la raison de défaillance satisfait la condition prédéfinie ; et
la synchronisation des données cibles dans la zone de mémoire cache de données avec le serveur en nuage.

3. Procédé selon la revendication 2, dans lequel la détermination que la raison de défaillance satisfait ou non la condition prédéfinie comprend :
la détermination (307) que la raison de défaillance satisfait la condition prédéfinie quand un état de réseau est anormal ou une charge du serveur en nuage est supérieure à un seuil prédéfini ; un état de réseau anormal étant détecté sur la base d'informations de paramètres de l'état de réseau, et les informations de paramètres comprenant au moins un retard de réseau, un taux de perte de paquets, une gigue et une qualité de service ; et
dans lequel la synchronisation des données cibles dans la zone de mémoire cache de données avec le serveur en nuage comprend :
la synchronisation (309) des données cibles dans la zone de mémoire cache de données avec le serveur en nuage quand l'état de réseau est rétabli ou la charge du serveur en nuage est inférieure au seuil prédéfini.

4. Procédé selon la revendication 1, dans lequel l'ajout des données cibles à la zone de mémoire cache de données comprend :
la division (308) des données cibles en une pluralité de blocs de données ;
l'assemblage (308) de la pluralité de blocs de données pour obtenir une commande de synchronisation reconnaissable par le serveur en nuage ;
l'ajout (308) de la commande de synchronisation à une zone de mémoire cache de données ; et
l'envoi de la commande de synchronisation dans la zone de mémoire cache de données avec le serveur en nuage.

5. Procédé selon l'une quelconque de la revendication 1, le procédé comprenant en outre :
après l'ajout des données cibles à la zone de mémoire cache de données et avant la synchronisation des données cibles dans la zone de mémoire cache de données avec le serveur en nuage, la mise à jour des données cibles dans la zone de mémoire cache de données sur la base de changements dans les données cibles quand les données cibles changent durant l'intervalle prédéfini.

6. Procédé selon la revendication 5, dans lequel la mise à jour des données cibles dans la zone de mémoire cache de données sur la base des changements dans les données cibles comprend :
la division des données cibles changées en une pluralité de nouveaux blocs de données ;
l'assemblage de la pluralité de nouveaux blocs de données pour obtenir une nouvelle commande de synchronisation reconnaissable par le serveur en nuage ; et
la mise à jour de la commande de synchronisation dans la zone de mémoire cache de données sur la base de la nouvelle commande de synchronisation.

7. Dispositif (40) de synchronisation de données, comprenant :
une première unité de détermination (401), configurée pour déterminer un type de données de données cibles à synchroniser, le type de données étant obtenu sur la base d'une fréquence de changements de données ou d'un nombre de changements de données, les données cibles étant indiquées par une commande de synchronisation de données reçue ;
une première unité de jugement (402), configurée pour déterminer si le type de données des données cibles est ou non un type de données prédéfini ;
une unité d'ajout (403), configurée pour ajouter, quand le type de données est le type de données prédéfini, les données cibles à une zone de mémoire cache de données, la zone de mémoire cache de données étant créée par un terminal sur la base d'une demande de création de zone de mémoire cache reçue ;
une première unité de synchronisation (404), configurée pour synchroniser les données cibles dans la zone de mémoire cache de données avec le serveur en nuage après un intervalle prédéfini en lançant une temporisation quand les données cibles sont ajoutées à la zone de mémoire cache de données, et en synchronisant les données cibles dans la zone de mémoire cache de données avec le serveur en nuage quand une durée de la synchronisation atteint une durée prédéfinie ; et
une deuxième unité de synchronisation (405), configurée pour envoyer une demande de synchronisation de données portant les données cibles au serveur en nuage afin de synchroniser les données cibles avec le serveur en nuage, quand le type de données n'est pas le type de données prédéfini.

8. Dispositif (40) selon la revendication 7, comprenant en outre une seconde unité de détermination (406), une seconde unité de jugement (407) et une troisième unité de synchronisation (408) ;
la seconde unité de détermination (406) étant configurée pour déterminer une raison de défaillance quand la demande de synchronisation de données n'est pas envoyée ;
la seconde unité de jugement (407) étant configurée pour déterminer si la raison de défaillance satisfait ou non une condition prédéfinie ; et
la troisième unité de synchronisation (408) étant configurée pour ajouter les données cibles à la zone de mémoire cache de données, et synchroniser les données cibles dans la zone de mémoire cache de données avec le serveur en nuage, quand la raison de défaillance ne satisfait pas la condition prédéfinie.

9. Dispositif (40) selon la revendication 8, dans lequel la seconde unité de jugement (407) est configurée pour déterminer que la raison de défaillance satisfait la condition prédéfinie quand un état de réseau est anormal ou une charge du serveur en nuages est supérieure à un seuil prédéfini ; un état de réseau anormal étant détecté sur la base d'informations de paramètres de l'état de réseau, et les informations de paramètres comprenant au moins un retard de réseau, un taux de perte de paquets, une gigue et une qualité de service ; et
la troisième unité de synchronisation (408) est configurée pour synchroniser les données cibles dans la zone de mémoire cache de données avec le serveur en nuage quand l'état de réseau est rétabli ou la charge du serveur en nuage est inférieure au seuil prédéfini.

10. Dispositif (40) selon l'une quelconque de la revendication 7, dans lequel l'unité d'ajout (403) est configurée pour :
diviser les données cibles en une pluralité de blocs de données ;
assembler la pluralité de blocs de données pour obtenir une commande de synchronisation reconnaissable par le serveur en nuage ;
ajouter la commande de synchronisation à une zone de mémoire cache de données ; et
dans lequel la première unité de synchronisation est configurée pour envoyer la commande de synchronisation dans la zone de mémoire cache de données au serveur en nuage.

11. Support de mémorisation, dans lequel est mémorisée une pluralité d'instructions, les instructions étant adaptées pour être chargées par un processeur afin d'exécuter un procédé de synchronisation de données selon l'une quelconque des revendications 1 à 6.
